**Europäisches Patentamt**

**European Patent Office**

**Office européen des brevets**

(19)

(11) Veröffentlichungsnummer: **0 102 523**
**B1**

(12) EUROPÄISCHE PATENTSCHRIFT

(45) Veröffentlichungstag der Patentschrift:
04.06.86

(21) Anmeldenummer: 83107551.0

(22) Anmeldetag: 01.08.83

(51) Int. Cl.⁴: **C 08 J 3/18, C 08 L 27/06**

(54) **Haftklebrige gelierte Plastisole.**

(30) Priorität: 09.08.82 DE 3229656

(43) Veröffentlichungstag der Anmeldung:
14.03.84 Patentblatt 84/11

(45) Bekanntmachung des Hinweises auf die Patenterteilung:
04.06.86 Patentblatt 86/23

(84) Benannte Vertragsstaaten:
AT BE CH DE FR GB IT LI LU NL SE

(56) Entgegenhaltungen:
GB - A - 1 027 665
US - A - 2 600 122

CHEMICAL ABSTRACTS, Band 87, Nr. 24, 12. Dezember
1977, Seite 54, Nr. 185720x, Columbus, Ohio, US

(73) Patentinhaber: **Henkel Kommanditgesellschaft auf
Aktien, Postfach 1100 Henkelstrasse 67,
D-4000 Düsseldorf-Holthausen (DE)**

(72) Erfinder: **Herold, Julius, Dr., Marie-Curie-Strasse 2,
D-4019 Monheim (DE)**
Erfinder: **Geisen, Ingeborg, Feldstrasse 16,
D-4000 Düsseldorf 30 (DE)**

**Beschreibung**

Die vorliegende Erfindung betrifft ein Verfahren zur Herstellung haftklebriger gelierter Plastisolprofile durch Vermischen von Polyvinylchlorid und/oder Polymethylmethacrylat, Weichmachern und üblichen Hilfsstoffen mit Vinylacetat-, Homo- oder Copolymerisaten und nachfolgender Formgebung durch Erwärmen auf 80 bis 130°C.

Unter Plastisolen werden Dispersionen von organischen Kunststoffen in Weichmachern verstanden, welche beim Erwärmen auf höhere Temperatur gelieren. Verwendung finden vornehmlich Plastisole auf Basis von Homopolymerisaten und Copolymerisaten des Vinylchlorids und des Methylmethacrylats. Sie werden in grossem Umfang als Beschichtungsmittel für Metalle und andere Substrate, als Klebmittel und Dichtungsmaterial verwendet. Nachteilig bei der Verwendung als Dichtungsmaterial ist das Fadenziehen der pastösen Massen, das häufig zu Verunreinigungen der abzudichtenden Gegenstände führt, was aufwendige Nachbearbeitungen erfordert. Dies lässt sich verhindern durch den Einsatz von an sich bekannten gelierten Plastisolbändern bzw. -profilen. Jedoch ist ihre Applikation aufgrund der durch das Gelieren verlorengegangenen Haftung auf den zu beschichtenden, insbesondere miteinander zu verbindenden Werkstoffen schwierig.

Der Erfindung lag die Aufgabe zugrunde, solche gelierten Plastisole in Form von Profilen, Bändern und dergleichen zur Verfügung zu stellen, welche aufgrund ihrer speziellen haftklebrigen Eigenschaften ohne zusätzliches äusseres Fixieren eingesetzt werden können.

Die Aufgabe wurde erfindungsgemäss gelöst durch ein neues Verfahren, welches dadurch gekennzeichnet ist, dass man üblichen ungelierten Plastisolmischungen auf Basis von Polyvinylchlorid und/oder Polymethylmethacrylat und den geeigneten Weichmachern auf 100 Gewichtsteile Polyvinylchlorid und/oder Polymethylmethacrylat 10 bis 200 Gewichtsteile Polyvinylacetat bzw. Mischpolymerisate des Vinylacetats mit Comonomeren aus der Gruppe Vinylalkohol-($C_3$-$C_{18}$)-ester, Ethylen, Propylen, Butylen, Vinylchlorid zumischt und aus diesem Gemisch durch Erwärmen auf 80 bis 130°C, insbesondere 90 bis 120°C, haftklebrige Formteile wie Profile bzw. Platten gestaltet.

Vorteilhaft kann man Formteile, die nach dem Erwärmen der Plastisolmischung erhalten wurden, in geeigneter Weise zerschneiden oder Profile oder Platten direkt durch Warmextrudieren herstellen.

Gegenstand der Erfindung sind weiterhin haftklebrige Formteile wie Profile bzw. Platten aus gelierten Plastisolen auf Basis von Polyvinylchlorid und/oder Polymethylmethacrylat, dadurch gekennzeichnet, dass sie zur Ausbildung der Klebrigkeit Polyvinylacetat bzw. Mischpolymerisate des Vinylacetats mit Comonomeren aus der Gruppe Vinylalkoholcarbonsäure-($C_3$-$C_{18}$)-ester, Ethylen, Propylen, Butylen, Vinylchlorid enthalten und nach Mischen der Bestandteile durch Erwärmen auf 80 bis 130°C, insbesondere 90 bis 120°C, in einen haftklebrigen Zustand überführt worden sind.

Besonders vorteilhaft eignen sich die haftklebrigen Profile zum Abdichten von Karosserieteilen beim Automobilbau.

Zur Erzielung des haftklebrigen Zustands werden auf 100 Gewichtsteile Polyvinylchlorid und/oder Polymethylmethacrylat 10 bis 200, insbesondere 25 bis 125 Gewichtsteile Polyvinylacetat und/oder die eingangs in der Erfindungsdefinition genannten Mischpolymerisate eingesetzt. Bei dieser wesentlichen Komponente handelt es sich um eine Gruppe von Polymeren, wie sie üblicherweise zur Herstellung von Plastisolen und Plastigelen nicht verwendet werden. Es handelt sich also um Polyvinylacetat bzw. um Vinylacetat enthaltende Polymerisate, wobei die Comonomeren ausgewählt sind aus der Gruppe Vinylester von Monocarbonsäuren mit 3 bis 18 Kohlenstoffatomen, Ethylen, Propylen, Butylen, Vinylchlorid und diese Produkte sind in den verschiedensten Zusammensetzungen im Handel erhältlich. Ihr Molekulargewicht und ihr Erweichungspunkt können demgemäss in weiten Grenzen variieren. Im allgemeinen wird man solche Polymerisate verwenden, deren K-Wert zwischen etwa 50 und 80, insbesondere zwischen 50 und 75 liegt. Für die Verarbeitung ist es sehr günstig, wenn die Korngrösse relativ klein ist und weitgehend unterhalb von 60 µm liegt. Besonders günstige Eigenschaften werden auch erhalten, wenn man Vinylacetat mit relativ grossen Mengen an Vinylchlorid mischpolymerisiert. In diesem Fall kann der Anteil von Vinylacetat bis auf etwa 10 bis 5% absinken. Günstige Ergebnisse werden ferner erzielt bei Vinylacetat-Ethylencopolymerisaten, deren Gewichtsverhältnis zwischen 80/20 und 40/60 liegt.

Als Grundlage für die erfindungsgemässen Plastisole können prinzipiell alle an sich bekannten sogenannten verpastbaren Polyvinylchloridsorten verwendet werden. Sie sollten möglichst einen K-Wert von etwa 60 bis 90 aufweisen und eine Korngrösse von 150 µm haben. Neben dem PVC selbst sind geeignet andere verpastbare pulverförmige Mischpolymerisate des Vinylchlorids, die aber zum überwiegenden Anteil aus Vinylchlorid bestehen und bei denen die Geliereigenschaften in der Hitze dem des reinen homopolymeren Vinylchlorids praktisch entsprechen. Zum Modifizieren kommen hier geringe Mengen Vinylidenchlorid oder auch Acrylsäure- bzw. Methacrylmethylester in Betracht. Wie bereits vorher festgestellt, sollen diese Comonomeren aber nur in sehr untergeordneter Menge, d.h. unterhalb etwa von 5 Mol-% vorhanden sein. Sie könnten sonst in eine dauerhafte, unerwünschte Wechselwirkung mit dem weiterhin einzusetzenden Polyvinylacetat bzw. den Mischpolymerisaten des Polyvinylacetats treten.

Für das erfindungsgemässe Verfahren sind als Ausgangsmaterial ferner verwendbar polymerisierter Methacrylsäuremethylester, wie er in bekannter Weise durch Emulsions- und Dispersionspolymerisation hergestellt werden kann. Vornehmlich werden solche Polymerisate eingesetzt, deren Molekulargewicht zwischen etwa 200 000 und 1 500 000 liegt. Das Molekulargewicht lässt sich in bekannter Weise durch Steuerung der Polymerisation beeinflussen. Unter Umständen können auch modifizierte Polymere des Methacrylsäuremethylesters eingesetzt werden, wobei zum Modifizieren insbesondere Alkylester der Methacrylsäure in Frage kommen, die sich von niederen Alkoholen wie Ethyl-, Propyl- und Butylalkohol bzw. deren Isomeren ableiten. Der Anteil dieser einpolymerisierten Ester soll aber ebenfalls 5 Mol-% nicht überschreiten. Selbstverständlich ist es möglich, auch andere Comonomere bei der Polymerisation des Methacrylsäuremethylesters mitzuverwenden, wenn deren Anteil unter der genannten Grenze bleibt, d.h., dass die Endeigenschaften des Polymerisats nicht erheblich von denen des reinen Polymeren-Methacrylsäuremethylesters abweichen. Selbstverständlich ist es auch möglich, Mischungen von PVC und Polymethacrylsäuremethylester bzw. im wesentlichen Vinylchlorid und/oder Methacrylsäuremethylester enthaltende Mischpolymerisate für das erfindungsgemässe Verfahren einzusetzen.

Als Weichmacher können die bekannten für PVC bzw. Polymerisate des Methacrylsäuremethylesters verwendet werden. Es kommen hier in Frage Ester der Phthalsäure wie Dibutylphthalat, Dicyclohexylphthalat, Methylcyclohexylphthalat, Dioctylphthalat, Didecylphthalat oder auch Sulfonsäureester aromatischer Verbindungen wie z.B. der Octadecylsulfonsäureester von Kresol bzw. Phenol. Aus praktischen Erwägungen kommen insbesondere Alkyl-($C_{14-16}$)-sulfonsäureester von Kresol bzw. Phenol in Frage. Weiter ist die Verwendung von Phosphorsäureestern wie Trikresylphosphat oder auch Adipinsäure- oder Sebacinsäureester von Alkoholen mittlerer Kettenlänge wie Butanol, Octanol und Decanol möglich. Schliesslich sind geeignete Weichmacher auch Benzylbenzoat oder auch der Dibenzoesäureester von Butandiol, Diethylenglykol oder Dipropylenglykol oder auch Derivate des Kolophoniums, wie z.B. dessen hydrierter Methylester.

Das Mengenverhältnis von Weichmacher zu polymeren Bestandteilen kann in weiten Grenzen variieren und ist von den Eigenschaften der eingesetzten Weichmacher wie auch der beiden polymeren Bestandteile abhängig. Im allgemeinen finden aber auf 100 Gewichtsteile etwa 20 bis 300, höchstens 400 Gewichtsteile Weichmacher Anwendung. Ein geringer Gehalt an Weichmachern kann insbesondere dann erwünscht sein bzw. erforderlich sein, wenn neben den üblichen sogenannten Weichmachern für die Herstellung der PVC-Plastisole noch weitere in ähnlicher Richtung wirkende Bestandteile wie Epoxidharze, z.B. auf Basis von Diphenylolpropan gegebenenfalls unter Zusatz von Kresylglycidylether, sowie epoxidierte Öle Anwendung finden. Diese Produkte wirken als Hilfsstoffe und beeinflussen die Eigenschaften der ausgehärteten Plastisole in günstiger Weise. Sie wirken sich auf die Zähigkeit und Widerstandsfähigkeit bzw. auf die Alterungsbeständigkeit der Plastisole in günstiger Weise aus.

Die neuen relativ kompliziert aufgebauten Plastisole mit dauernder Haftklebrigkeit in vorgeliertem Zustand enthalten weiterhin in bekannter Weise Füllstoffe wie Bariumsulfat, Calciumcarbonat, gemahlenen Dolomit oder auch Pigmente wie Titandioxid oder Eisenoxid. In vielen Fällen ist die Mitverwendung von Calciumsilikat bzw. von Kiegelsäure, insbesondere durch Pyrolyse hergestellter Kieselsäure zweckmässig. Diese wirken sich günstig auf die rheologischen Eigenschaften der neuen Systeme aus.

Ferner hat es sich als zweckmässig erwiesen, Zusätze zur Verbesserung der Haftung der ausgelierten bzw. durchgehärteten Polymerisate auf den verschiedensten Untergründen zuzusetzen. Derartige Zusätze sind bekannt und bestehen beispielsweise aus Methacrylsäureestern von mehrwertigen Alkoholen wie z.B. Ethylenglykol, Trimethylolpropan, Pentaerythrit oder auch Glycerin. Damit die genannten Zusätze wirksam werden, ist es aber erforderlich, Peroxide, die als Initiatoren wirken können, zuzugeben. Es kommen hier organische Peroxide in Frage wie etwa Cumolhydroperoxid, tert.-Butylhydroperoxid, Diisopropylbenzolhydroperoxid oder tert.-Butylpermaleinat oder auch Cyclohexanonperoxid. Aber auch anorganische Sauerstoff abgebende Verbindungen sind verwendbar wie Bariumperoxid, Blei-IV-oxid, Mangan-IV-oxid oder auch Alkaliperoxodisulfate. Als Haftvermittler kommen ferner Phenol- und Melaminharze sowie Polyamidharze mit freien Aminogruppen in Frage.

Als günstige Kombination hat sich der Zusatz von Butandioldimethacrylat und/oder Trimethylpropandimethacrylat zusammen mit Cumolhydroperoxid erwiesen.

Die nach dem erfindungsgemässen Verfahren erhältlichen haftklebrigen Plastisole haften auf den verschiedensten Substraten wie grundierten bzw. lackierten, nicht von fettigen Bestandteilen befreiten Oberflächen. Auch auf mit einer Elektrocoating versehenen Oberfläche oder auf völlig unbehandelten Metallen ist Haftung gegeben. Dies bezieht sich sowohl auf den vorgelierten als auch durchgehärteten Zustand der neuen Plastisolprodukte.

Besonders günstig ist es, dass man neue haftklebrige Plastisole ohne eine zusätzliche Fixierung durchhärten kann. Es genügt, wenn man sie vor der eigentlichen bei der erhöhten Temperatur stattfindenden Härtung auf ein Substrat aufdrückt, z.B. auf Teile einer Autokarosserie. Hier ist die Haftklebrigkeit ausreichend bzw. ist so einzustellen, dass sie auch beim anschliessenden Erwärmungsvorgang sich nicht von der Oberfläche ablösen. Je nach Wahl der einzelnen Bestandteile können sowohl relativ steife, bei der eigentlichen Härtung nicht mehr fliessende Plastisole hergestellt werden, während in anderer Weise auch solche Formteile hergestellt werden können, die sich unter dem Einfluss der Schwerkraft noch verformen und so in kleine Unebenheiten bzw. Vertiefungen eindringen.

*Beispiele*

In einem Zwangsmischer wurden die in den nachfolgenden Beispielen genannten Komponenten so lange gemischt, bis eine homogene Paste entstanden war. Dazu wurden die bei Raumtemperatur flüssigen Komponenten vorgelegt und anschliessend die festen Bestandteile nach und nach zugegeben.

*Beispiel 1*

15,8 kg Polyvinylchlorid
　　K-Wert = 90, Korngrösse: 90% < 60 μ

3,8 kg Vinylchlorid-Vinylacetat-Copolymeres
(10% Vinylacetat) K-Wert = 65, Korngrösse: 90% < 60 μ
49,0 kg Dimethylcyclohexylphthalat
2,0 kg Calciumoxid
23,2 kg Bariumsulfat
5,0 kg Trimethylolpropantrimethacrylat
0,2 kg Cumolhydroperoxid (80%ig in Cumol)
1,0 kg dreibasisches Bleisulfat

*Beispiel 2*

7,5 kg Polyvinylchlorid
K-Wert = 74, Korngrösse: 90% < 50 μ
7,5 kg Vinylchlorid-Vinylacetat-Copolymeres
(10% Vinylacetat) K-Wert = 65, Korngrösse: 90% < 60 μ
44,0 kg Di(methylcyclohexyl)phthalat
40,0 kg Bariumsulfat
1,0 kg Kondensationsprodukt aus dimerisierten
Fettsäuren und Polyaminen
(Aminzahl = 290)

*Beispiel 3*

7,5 kg Polymethylmethacrylat
Glasumwandlungstemperatur = –14°C
Korngrösse: 90% < 50 μ
7,5 kg Vinylacetat-Ethylen-Copolymeres
Korngrösse: 1-5 μ
44,0 kg Dimethylcyclohexylphthalat
40,0 kg Bariumsulfat
1,0 kg Kondensationsprodukt aus dimerisierten
Fettsäuren und Polyaminen
(Aminzahl = 290)

*Beispiel 4*

7,5 kg Polymethylmethacrylat
Glasumwandlungstemperatur = –14°C
Korngrösse: 90% < 50 μ
7,5 kg Vinylacetat-Ethylen-Copolymeres
Korngrösse: 1-5 μ
44,0 kg Dimethylcyclohexylphthalat
35,8 kg Bariumsulfat
5,0 kg Trimethylolpropantrimethacrylat
0,2 kg Cumolhydroperoxid (80%ig in Cumol)

Aus den wie vorstehend angegebenen Mischungen wurden 2-3 mm dicke Platten gegossen und in einem Umluftschrank bei 100°C während 10 Min. geliert. Die Platten wurden in etwa 2-3 mm breite Streifen mit quadratischem Querschnitt zerschnitten. Von den so hergestellten vorgelierten, haftklebrigen Streifen zeigten die gemäss Beispiel 1 und 4 hergestellten gegenüber unbehandeltem, noch Ölrückstände aufweisenden, aber auch gegenüber gereinigtem Stahl gute Haftung. Gegenüber gereinigtem und mit einer Grundierung (Elektrocoating) versehenem Stahl zeigten die Mischungen nach den Beispielen 2 und 3 eine gute Haftung.

Die eigentliche Aushärtung der gelierten Plastisolstreifen wurde während 15 Min. bei 160°C vorgenommen. Die nach Beispiel 1 und 4 hergestellten Streifen verliefen während der eigentlichen Härtung kaum, während sich die nach Beispiel 2 und 3 hergestellten Streifen unter dem Einfluss der Schwerkraft deutlich verformten bzw. verliefen und so auch kleine Hohlräume ausfüllten.

An Stahlblechen, die mit einem Elektrocoating versehen waren, wurde nach Härten bei 170°C/15 Min. zwischen Blechen bei einer Schichtdicke von 2 mm Schichtdicke und Überlänge 25 × 10 mm folgende Zugscherfestigkeit gemessen (Durchschnitt von 5 Messungen)

| Beispiel | N/cm² |
|----------|-------|
| 1 | 160 |
| 2 | 170 |
| 3 | 80 |
| 4 | 100 |

**Patentansprüche**

1. Verfahren zur Herstellung von haftklebrigen Formteilen aus gelierten Plastisolen, dadurch gekennzeichnet, dass man üblichen ungelierten Plastisolmischungen auf Basis von Polyvinylchlorid und/oder Polymethylmethacrylat und den geeigneten Weichmachern auf 100 Gewichtsteile Polyvinylchlorid und/oder Polymethylmethacrylat 10 bis 200 Gewichtsteile Polyvinylacetat bzw. Mischpolymerisate des Vinylacetats mit Comonomeren aus der Gruppe Vinylalkohol-(C₃-C₁₈)-ester, Ethylen, Propylen, Butylen, Vinylchlorid zumischt und aus diesem Gemisch durch Erwärmen auf 80 bis 130°C, insbesondere 90 bis 120°C, haftklebrige Formteile wie Profile bzw. Platten gestaltet.

2. Verfahren nach Anspruch 1, dadurch gekennzeichnet, dass man die Formteile nach dem Erwärmen der Plastisolmischung in geeigneter Weise zerschneidet oder sie direkt durch Warmextrudieren herstellt.

3. Haftklebrige Formteile wie Profile bzw. Platten aus vorgelierten Plastisolen auf Basis von Polyvinylchlorid und/oder Polymethylmethacrylat, dadurch gekennzeichnet, dass sie zur Ausbildung der Klebrigkeit auf 100 Gewichtsteile Polyvinylchlorid und/oder Polymethylmethacrylat 10 bis 200 Gewichtsteile Polyvinylacetat bzw. Mischpolymerisate des Vinylacetats mit Comonomeren aus der Gruppe Vinylcarbonsäure-(C₃-C₁₈)-ester, Ethylen, Propylen, Butylen, Vinylchlorid enthalten und nach Mischen der Bestandteile durch Erwärmen auf 80 bis 130°C, insbesondere 90 bis 120°C, in einen haftklebrigen Zustand überführt worden sind.

4. Verwendung der haftklebrigen Polymerisate nach Anspruch 3 zum Verbinden, Abdichten und Versteifen von Karosserieteilen beim Fahrzeugbau.

**Claims**

1. A process for the production of contact-adhesive shaped structures of gelles plastisols, characterized in that from 10 to 200 parts by weight of polyvinyl acetate or copolymers of vinyl acetate with comonomers from the group comprising vinyl alcohol-$(C_3-C_{18})$-esters, ethylene, propylene, butylene, vinyl chloride are added to standard ungelled plastisol mixtures based on polyvinyl chloride and/or polymethyl methacrylate and the appropriate plasticizers per 100 parts by weight of polyvinyl chloride and/or polymethyl methacrylate and contact-adhesive shaped structures, such as profiles or sheets, are made from the resulting mixture by heating to 80 to 130°C and preferably to 90 to 120°C.

2. A process as claimed in Claim 1, characterized in that, after the plastisol mixture has been heated, the shaped structures are suitably cut or are directly produced by hot extrusion.

3. Contact-adhesive shaped structures, such as profiles or sheets of pregelled plastisols based on polyvinyl chloride and/or polymethyl methacrylate, characterized in that, to develop their tackiness, they contain from 10 to 200 parts by weight of polyvinyl acetate or copolymers of vinyl acetate with comonomers from the group comprising vinyl carboxylic acid-$(C_3-C_{18})$-esters, ethylene, propylene, butylene, vinyl chloride to 100 parts by weight of polyvinyl chloride and/or polymethyl methacrylate and, after mixing of the constituents, were converted into a contact-adhesive state by heating to 80 to 130°C and preferably to 90 to 120°C.

4. The use of the contact-adhesive polymers claimed in Claim 3 for joining, sealing and stiffening coachwork sections in vehicle manufacture.

**Revendications**

1. Procédé de fabrication de pièces moulées adhésives de contact à partir de plastisols gélifiés, caractérisé en ce qu'on adjoint aux mélanges de plastisols non gélifiés usuels, à base de chlorure de polyvinyle et/ou de polyméthacrylate de méthyle et de plastifiants appropriés, pour 100 parties en poids de chlorure de polyvinyle et/ou de polyméthacrylate de méthyle, 10 à 200 parties en poids d'acétate de polyvinyle ou de copolymères d'acétate de vinyle avec des comonomères appartenant au groupe d'esters (en $C_3-C_{18}$) d'alcool vinylique, d'éthylène, de propylène, de butylène, de chlorure de vinyle, et en ce qu'à partir de ce mélange, par chauffage à 80 à 130°C, en particulier à 90 à 120°C, on produit des pièces moulées adhésives de contact, telles que des profilés ou des plaques.

2. Procédé selon la revendication 1, caractérisé en ce qu'on découpe les pièces moulées après chauffage du mélange de plastisol d'une manière appropriée ou bien on les fabrique directement par extrusion à chaud.

3. Pièces moulées adhésives de contact telles que des profilés ou des plaques à partir de plastisols préalablement gélifiés à base de chlorure de polyvinyle et/ou de polyméthacrylate de méthyle, caractérisées en ce qu'elle contiennent pour l'obtention du collant, pour 100 parties en poids de chlorure de polyvinyle et/ou de polyméthacrylate de méthyle, 10 à 200 parties en poids d'acétate de polyvinyle ou de copolymères de l'acétate de vinyle avec des comonomères du groupe d'esters d'acides carboxyliques (en $C_3-C_{18}$) de vinyle, d'éthylène, de propylène, de butylène, de chlorure de vinyle et en ce qu'après mélange des constituants elles sont converties par chauffage à 80 à 130°C, en particulier à 90 à 120°C, en un état collant de contact.

4. Utilisation des polymères adhésifs de contact selon la revendication 3 pour relier, étanchéiser et renforcer des éléments de carrosserie dans la construction de véhicules.